# EUROPÄISCHE PATENTSCHRIFT

(11) **EP 3 103 182 B1**
(45) Veröffentlichungstag und Bekanntmachung des Hinweises auf die Patenterteilung: **11.04.2018**
(21) Anmeldenummer: 15708546.5
(22) Anmeldetag: 10.03.2015
(51) Int. Cl.: H02J 7/00, H02J 9/00

(54) **VORRICHTUNG UND VERFAHREN ZUM BESCHALTEN EINES BATTERIEMANAGEMENTSYSTEMS**
DEVICE AND METHOD FOR CONNECTING A BATTERY MANAGEMENT SYSTEM
DISPOSITIF ET PROCÉDÉ DE COMMUTATION D'UN SYSTÈME DE GESTION DE BATTERIE

(30) Priorität: 11.03.2014 DE 102014204473
(43) Veröffentlichungstag der Anmeldung: 14.12.2016
(73) Patentinhaber: Fraunhofer-Gesellschaft zur Förderung der angewandten Forschung e.V., 80686 München (DE)
(72) Erfinder: JUNG, Max, 79189 Bad Krozingen (DE); LUX, Stephan, 79312 Emmendingen (DE)
(74) Vertreter: Zimmermann, Tankred Klaus
(86) Internationale Anmeldenummer: PCT/EP2015/054959
(87) Internationale Veröffentlichungsnummer: WO 2015/135938

(56) Entgegenhaltungen:
- EP-A1- 2 528 188
- EP-A2- 1 289 096
- DE-A1-102008 052 986
- US-A1- 2014 035 365

## Beschreibung

Ausführungsbeispiele der vorliegenden Erfindung beziehen sich auf ein Schaltungssystem zum Beschalten eines Batteriemanagementsystems. Weitere Ausführungsbeispiele beziehen sich auf ein Verfahren zum Beschalten eines Batteriemanagementsystems.

Für die Überwachung, die Steuerung und die Vermessung von wiederaufladbaren chemischen Energiespeichern in verschiedenen Anwendungsgebieten werden Managementsysteme z.B. in Form von Elektronikplatinen mit entsprechend integrierter Software benötigt. Diese Managementsysteme werden im Folgenden als Batteriemanagementsystem (Abkürzung: BMS) bezeichnet. Ein Beispiel eines chemischen Speichers ist die Lithium-Ionen Batterie, welche aufgrund ihrer hohen Energiedichte an Attraktivität zunimmt.

Da einzelne Batteriezellen meist nur über sehr geringe Spannungen verfügen, bei Lithium-Ionen Batteriezellen sei als Beispiel eine Nennspannung von 3,6 V genannt, werden Batteriezellen elektrisch in Reihe geschaltet, um höhere Spannungen zu erreichen. Außerdem ist eine Parallelschaltung derselben von hohem Nutzen, um die Kapazität zu erhöhen. Solche Zellverbünde werden Batteriesysteme genannt. Es ist ratsam, diese Zellverbünde mit Hilfe eines BMS zu überwachen, da es sonst beim Laden und Entladen zu Überladungen und/oder Tiefentladungen kommen kann. Dies kann im schlimmsten Fall zu einer Explosion einer Batteriezelle führen. Außerdem kann es aus verschiedenen Gründen wichtig sein, den aktuellen Ladezustand der einzelnen Batteriezellen sowie deren Temperatur zu kennen. Weiter sollte auf Systemebene entsprechend geschaltet werden können, ein Kühlsystem für das Batteriesystem kann notwendig sein, um höhere Leistungen bereitstellen zu können. Ein BMS benötigt zur Überwachung solcher Batteriesysteme selbst eine Energieversorgung. Diese muss entsprechend effizient und sicher ausgelegt sein.

Stand der Technik bei der Energieversorgung eines BMS ist, dass die gesamte Elektronik oder zumindest ein Schaltungsteil des BMS direkt aus den zu überwachenden Batteriezellen mit Energie versorgt wird DE102008052986, EP2204874, DE102011079292, EP2549581. Der andere Schaltungsteil wird alternativ aus einer externen Energiequelle oder bei netzautarken Systemen ebenfalls aus den überwachenden Batteriezellen versorgt. Dies hat zur Folge, dass ein BMS durch dessen Eigenverbrauch ein Batteriesystem oder eine einzelne Batteriezelle tiefentladen kann. Dies kann vor allem dann passieren, wenn das Batteriesystem lange Zeit nicht geladen wird. Beispielsweise ein Elektrofahrzeug, welches über den Sommerurlaub mehrere Wochen ohne Energieversorgung in der Garage steht. Im Fall einer Reparatur oder einer Einlagerung über mehrere Monate muss das BMS von der Batterie mechanisch abgetrennt werden.

Der vorliegenden Erfindung liegt somit die Aufgabe zugrunde, ein Konzept zur Überwachung und zum sicheren Betrieb von Batteriezellen bereitzustellen und gleichzeitig Tiefentladungen des Batteriesystem oder einzelner Batteriezellen durch das Überwachungssystem zu vermeiden.

Die Aufgabe wird gelöst durch eine Vorrichtung nach Anspruch 1, ein Verfahren nach Anspruch 16, und ein Computerprogramm gemäß Anspruch 18.

Ausführungsbeispiele der vorliegenden Erfindung schaffen ein Schaltungssystem, welches ein Batteriemanagementsystem, eine erste Schalteinheit und eine Steuerung aufweist. Die erste Schalteinheit verbindet in einem ersten Zustand eine erste Energiequelle leitend mit dem Batteriemanagementsystem und unterbricht in einem zweiten Zustand die Energieversorgung des Batteriemanagementsystem aus der ersten Energiequelle, wobei die Steuerung, die erste Schalteinheit steuert.

Des Weiteren wird ein Verfahren zum Beschalten einer Energieversorgung eines Batteriemanagementsystems bereitgestellt. Das Verfahren, weist folgende Schritte auf:
- Ansteuern einer ersten Schalteinheit durch eine Steuerung,
- Verbinden einer ersten Energiequelle mit dem Batteriemanagementsystem durch die erste Schalteinheit in einem ersten Zustand der ersten Schalteinheit, und
- Unterbrechen der Energieversorgung des Batteriemanagementsystem aus der ersten Energiequelle in einem zweiten Zustand der ersten Schalteinheit.

Ferner wird ein Computerprogramm mit einem Programmcode zur Durchführung des oben beschriebenen Verfahrens bereitgestellt, wenn das Computerprogramm auf einem Computer oder Prozessor abläuft.

Die vorliegende Erfindung nutzt den Effekt, dass durch ein intelligentes Abtrennen eines Batteriemanagementsystem von einer ersten Energiequelle durch eine erste Schalteinheit dem Batteriemanagementsystem keine elektrische Energie mehr zugeführt wird. Eine erhöhte Selbstentladung der ersten Energiequelle bzw. ein erhöhter Energieverbrauch aus der ersten Energiequelle wird eingedämmt und dadurch die Energieeffizienz gesteigert. Ein gesenkter Energieverbrauch und erhöhte Effizienz bringt wirtschaftliche Vorteile mit sich und schont die Umwelt. Dies ist vor allem bei Batterieversorgungssystemen von großer Bedeutung. Zusätzlich können längere Zeiten des Stillstands ohne regelmäßige Prüfung der ersten Energiequelle hingenommen werden. Eine mechanische Abtrennung des Batteriemanagementsystems von der ersten Energiequelle ist nicht mehr notwendig. Daraus ergibt sich eine bessere Wartbarkelt des Schaltungssystems. Die Sicherheit des Schaltungssystems wird bei einigen Ausführungsbeispielen ferner dadurch erhöht, dass einer Tiefentladung durch Selbstentladung durch das Batteriemanagementsystem von vorn herein vorgebeugt wird, indem sich das Batteriemanagementsystem intelligent abschalten kann, falls es einen niedrigen Ladezustand der ersten Energiequelle erkennt.

In Ausführungsbeispielen kann die erste Energiequelle ein Batteriesystem sein, welches durch das Batteriemanagementsystem kontrolliert ist. Dadurch ist ein energieautarker Betrieb des Batteriemanagementsystem zusammen mit der ersten Energiequelle möglich.

In weiteren Ausführungsbeispielen kann das Schaltungssystem weiter eine zweite Schalteinheit umfassen, welche in einem ersten Zustand eine zweite Energiequelle leitend mit dem Batteriemanagementsystem verbindet und in einem zweiten Zustand die Energieversorgung des Batteriemanagementsystem aus der zweiten Energiequelle unterbricht, wobei die Steuerung auch die zweite Schalteinheit steuert. Die zweite Energiequelle kann als Energieversorgungsnetz oder Bordnetz ausgebildet sein. Durch die zweite Schalteinheit kann das Batteriemanagementsystem mit einer zweiten Energiequelle verbunden und mit Energie versorgt werden; dies schont in der Regel den Ladestand der ersten Energiequelle. Die zweite Energiequelle ermöglicht zum einen, dass bestimmte Funktionen des Batteriemanagementsystem bei unterbrochener Energieversorgung aus der ersten Energiequelle über die zweite Energiequelle mit Energie versorgt werden können, zum anderen können auch bei aktiver Energieversorgung aus der ersten Energiequelle, Teile des Batteriemanagementsystem mit Energie aus der zweiten Energiequelle versorgt werden, um die erste Energiequelle zu entlasten. Das Energieversorgungsnetz oder das Bordnetz stellen von der ersten Energiequelle unabhängige Energiequellen dar. Ein Energieversorgungsnetz ist in den meisten bewohnten Gebieten verfügbar. Bei Fahrzeugen ist oft ein zusätzliches unabhängiges Bordnetz vorhanden.

In Ausführungsbeispielen kann das Schaltungssystem eine Schutzschaltung aufweisen, welche ausgebildet ist, eine Stromstärke zwischen der ersten Energiequelle und der zweiten Energiequelle auf einen zulässigen Maximalwert oder im Wesentlichen auf Null zu begrenzen. Durch die Begrenzung der Stromstärke zwischen den beiden Energiequellen kann ein unkontrollierter Kurzschlussstrom verhindert werden. In einer bevorzugten Ausführungsform ist die Stromstärke im Wesentlichen auf Null begrenzt. Dadurch wird verhindert, dass die zweite Energiequelle die erste Energiequelle oder umgekehrt die erste Energiequelle die zweite Energiequelle mit Energie versorgt.

Die Steuerung kann ausgebildet sein, um aus der ersten Energiequelle oder einer weiteren Energiequelle mit elektrischer Energie versorgt zu werden. Die Steuerung weist vorzugsweise nur einen geringen Energiebedarf auf, um die erste Energiequelle möglichst wenig zu belasten. Bei einer Energieversorgung der Steuerung aus der ersten Energiequelle kann das ganze Schaltungssystem energieautark betrieben werden. Falls die Steuerung aus einer weiteren Energiequelle mit elektrischen Energie versorgt wird, kann die erste Energiequelle, im Fall dass sich die erste Schalteinheit in einem zweiten Zustand befindet, vollständig entlastet werden, d.h. es sind dann keine Verbraucher mehr an der ersten Energiequelle angeschlossen.

Die Steuerung kann als Teil des Batteriemanagementsystem ausgebildet sein. Dadurch lässt sich die Steuerung bspw. in das Batteriemanagementsystem integrieren, wodurch Platz und Kosten eingespart werden können.

Das Batteriemanagementsystem kann eine Batteriezell-Elektronik und eine Überwachungseinheit umfassen, wobei das Batteriemanagementsystem so ausgebildet sein kann, dass die Batteriezell-Elektronik aus dem Batteriesystem mit Energie versorgt wird und die Überwachungseinheit aus der zweiten Energiequelle mit Energie versorgt wird. Durch die Energieversorgung aus zwei unterschiedlichen Energiequellen kann beispielsweise die Energieversorgung für einen Teil des Batteriemanagementsystems zu- oder abgeschaltet werden, während ein anderer Teil des Batteriemanagementsystems unabhängig davon mit Energie versorgt werden kann bzw. ebenfalls zu- oder abgeschaltet werden kann. Ferner lässt sich dadurch auch Energie aus der ersten Energiequelle einsparen, in dem nur ein Teil des Batteriemanagementsystems aus der ersten Energiequelle versorgt wird.

In weiteren Ausführungsbeispielen kann die Batteriezell-Elektronik an einem vom Batteriemanagementsystem entfernten Ort angeordnet sein. Es können auch eine Mehrzahl von Batteriezell-Elektroniken bei den Batteriezellen angeordnet werden. Durch eine dezentrale Erfassung der Daten kann bspw. die Datenmenge, welche zwischen dem Batteriemanagementsystems und den Batteriezellen ausgetauscht werden, reduziert werden. Ferner kann der Verkabelungsaufwand für das Schaltungssystem reduziert werden.

Das Batteriemanagementsystem kann ausgebildet sein, verschiedene Betriebszustände anzunehmen, wobei das Batteriemanagementsystem einen ersten Betriebszustand annimmt, wenn die erste Schalteinheit und die zweite Schalteinheit im ersten Zustand sind, einen zweiten Betriebszustand annimmt, wenn die erste Schalteinheit im zweiten Zustand ist und die zweite Schalteinheit im ersten Zustand ist, und einen dritten Betriebszustand annimmt, wenn die erste Schalteinheit und die zweite Schalteinheit im zweiten Zustand sind. In einem ersten Betriebszustand wird das Batteriemanagementsystem aus beiden Energiequellen mit Energie versorgt; die Überwachung und Steuerung des Batteriesystems kann dabei vollständig aktiviert sein. In dem zweiten Betriebszustand ist das Batteriemanagementsystem nur durch die zweite Energiequelle mit Energie versorgt, die Überwachung und Steuerung des Batteriesystems kann in diesem Zustand reduziert werden, wodurch bspw. Energie eingespart werden kann. In einem dritten Betriebszustand in welcher das Batteriemanagementsystem von den beiden Energiequellen getrennt ist, verbraucht das Batteriemanagementsystem keine Energie.

Ferner kann das Batteriemanagementsystem ausgebildet sein, um aufgrund einer von der Batteriezell-Elektronik ausgegebenen Batterieinformation und einer von der Überwachungseinheit ausgegebene Überwachungsinformation eine Steuerinformation zu generieren und die Steuerinformation an die Steuerung zu übertragen. Beispielsweise kann das Batteriemanagementsystem ausgebildet sein um festzustellen, dass kein Energiezufluss zu der ersten Energiequelle stattfindet und auch kein Energieabfluss aus der ersten Energiequelle stattfindet und folglich einen Wechsel von einem ersten Betriebszustand des Batteriemanagementsystems in einen zweiten Betriebszustand des Batteriemanagementsystems veranlassen. Die Steuerinformation wird von der Steuerung ausgegeben und veranlasst die erste Schalteinheit und/oder die zweite Schalteinheit, ihren Zustand zu wechseln. Dadurch wird der Betriebszustand des Batteriemanagementsystems verändert. Wenn kein Energiezu- oder -abfluss zu der ersten Energiequelle stattfindet, kann das Batteriemanagementsystems von einem normalen Betriebsmodus in einen Standbymodus wechseln und dadurch den Energieverbrauch der ersten Energiequelle reduzieren.

Ferner wird ein Verfahren zum Beschalten einer Energieversorgung eines Batteriemanagementsystems bereitgestellt. Das Verfahren weist folgende Schritte auf: Ansteuern einer ersten Schalteinheit durch eine Steuerung, und Verbinden einer ersten Energiequelle mit dem Batteriemanagementsystem durch die erste Schalteinheit in einem ersten Zustand, Unterbrechen der Energieversorgung des Batteriemanagementsystem aus der ersten Energiequelle in einem zweiten Zustand der ersten Schalteinheit.

Des Weiteren wird ein Computerprogramm mit einem Programmcode zur Durchführung des oben beschriebenen Verfahrens bereitgestellt, wenn das Computerprogramm auf einem Computer oder Prozessor abläuft.

Ausführungsbeispiele der vorliegenden Erfindung werden bezugnehmend auf die beiliegenden Figuren näher erläutert. Es zeigen:
- Fig. 1a: eine schematische Darstellung eines ersten Ausführungsbeispiel eines Schaltungssystem, mit externer Steuerung;
- Fig. 1b: eine schematische Darstellung eines zweiten Ausführungsbeispiel des Schaltungssystem, mit in dem Batteriemanagementsystems integrierter Steuerung;
- Fig. 2: eine schematische Darstellung eines weiteren Ausführungsbeispiel eines Schaltungssystem;
- Fig. 3: einen Zustandsautomaten eines Batteriemanagementsystems;
- Fig. 4: eine schematische Darstellung eines weiteren Ausführungsbeispiel eines Schaltungssystem;
- Fig. 5: eine schematische Darstellung eines weiteren Ausführungsbeispiel eines Schaltungssystem.

In der nachfolgenden Beschreibung der Ausführungsbeispiele der Erfindung werden in den Figuren gleiche oder gleichwertige Elemente mit den gleichen Bezugszeichen versehen, so dass deren Beschreibung in den unterschiedlichen Ausführungsbeispielen austauschbar sind.

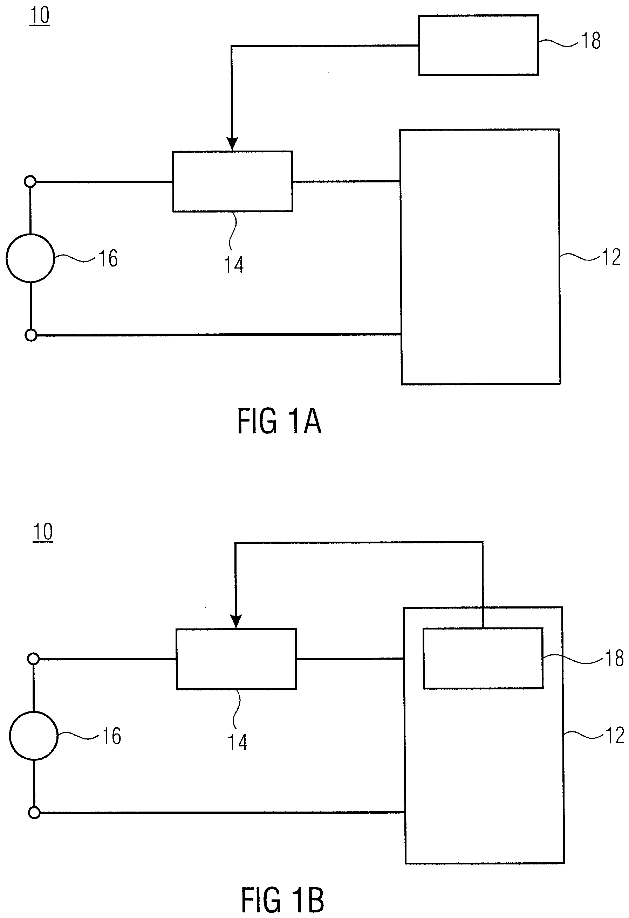

Die Figuren 1a und 1b zeigen eine schematische Darstellung eines ersten und zweiten Ausführungsbeispiels eines Schaltungssystems 10. Das Schaltungssystem 10 gemäß dem ersten bzw. zweiten Ausführungsbeispiel umfasst je ein Batteriemanagementsystem 12, eine erste Schalteinheit 14, welche in einem ersten Zustand eine erste Energiequelle 16 leitend mit dem Batteriemanagementsystem 12 verbindet und in einem zweiten Zustand die Energieversorgung des Batteriemanagementsystem 12 aus der ersten Energiequelle 16 unterbricht. Ferner umfasst das Schaltungssystem 10 eine Steuerung 18, die die erste Schalteinheit 14 steuert.

In Figur 1a ist die Steuerung 18 gegenüber dem Batteriemanagementsystem 12 eine externe Einheit. Die Steuerung 18 kann aber auch wie in Figur 1b gezeigt in das Batteriemanagementsystem 12 integriert sein.

Ein Batteriemanagementsystem 12 (BMS) ist eine elektronische Schaltung oder Einheit zur Regelung, Überwachung, Vermessung und Kontrolle einer nachladbaren chemischen Energiequelle 16, wie bspw. einer Batteriezelle oder eines Batteriesystems, bzw. eines Akkumulators. Die Notwendigkeit eines Batteriemanagementsystem 12 ergibt sich bei der Zusammenschaltung einer Mehrzahl von Batteriezellen zu einem Batteriesystem. Ein Batteriesystem 12 kann eine oder mehreren Batteriezellen umfassen. Das Batteriemanagementsystem 12 soll dabei die durch die unvermeidbaren fertigungsbedingten Streuungen verschiedener Parameter der Batteriezellen, etwa Kapazität und Leckströme, entstehenden Auswirkungen erkennen, überwachen und regeln. Als Batteriezelle oder Batteriesystem (Batterieeinheit) ist jeder Batterietyp denkbar sowohl Sekundäre als auch Primäre (Beispiel: Lithium-Ionen Batteriezellen, alle Arten von Batteriezellchemien, Bleibatterie, Nickel-Cadmium-Batterie, Redox-Flow Batterie)

Die erste Schalteinheit 14 (erste elektrische Schalteinheit) kann beispielsweise einen elektromechanischen Schalter wie bspw. ein Relais oder einen sonstigen mechanischen Schalter umfassen, welcher als Öffner oder als Schließer ausgebildet ist. Ferner kann die erste Schalteinheit auch einen Halbleiterschalter wie beispielsweise einen Transistor oder einen Feldeffekttransistoren umfassen. Die erste Schalteinheit 14 kann mindestens einen ersten Zustand und einen zweiten Zustand annehmen. Die Ansteuerung der ersten Schalteinheit 14 kann unterschiedlich gewählt werden: bspw. digital (z.B. Mikrocontroller) oder analog.

In einem ersten Zustand besteht zwischen der ersten Energiequelle 16 und dem Batteriemanagementsystem 12 eine niederohmige, elektrisch leitende Verbindung, so dass ein elektrischer Stromkreis geschlossen ist. In einem zweiten Zustand ist der elektrische Stromkreis zwischen der ersten Energiequelle 16 und dem Batteriemanagementsystem 12 unterbrochen, d.h. es besteht keine, bzw. lediglich eine hochohmige elektrische Verbindung zwischen der Energiequelle 16 und Batteriemanagementsystem 12. Im zweiten Zustand ist der Energiezufluss zum Batteriemanagementsystem unterbrochen oder abgetrennt, wodurch keine Entladung der ersten Energiequelle 16 durch das Batteriemanagementsystem 12 stattfindet.

Die Steuerung 18 kann an die erste Schalteinheit 14 einen Steuerbefehl zum Wechseln zwischen dem ersten Zustand und dem zweiten Zustand senden. Die Steuerung 18 kann auch ausgebildet sein, um einen Zustand der ersten Schalteinheit 14 abzufragen, bzw. von der ersten Schalteinheit 14 mitgeteilt zu bekommen. Dadurch ist der Zustand der ersten Schalteinheit 14 der Steuerung 18 bekannt oder kann abgefragt werden.

Die erste Energiequelle 16 des Schaltungssystems 10 kann ein Batteriesystem 24 sein, welches durch das Batteriemanagementsystem 12 kontrolliert wird. Die erste Energiequelle 16, welche das Batteriemanagementsystem 12 mit Energie versorgt, kann zugleich das von dem Batteriemanagementsystem 12 überwachte Batteriesystem sein. Dadurch ist ein energieautarker Betrieb des Schaltungssystems 10 möglich.

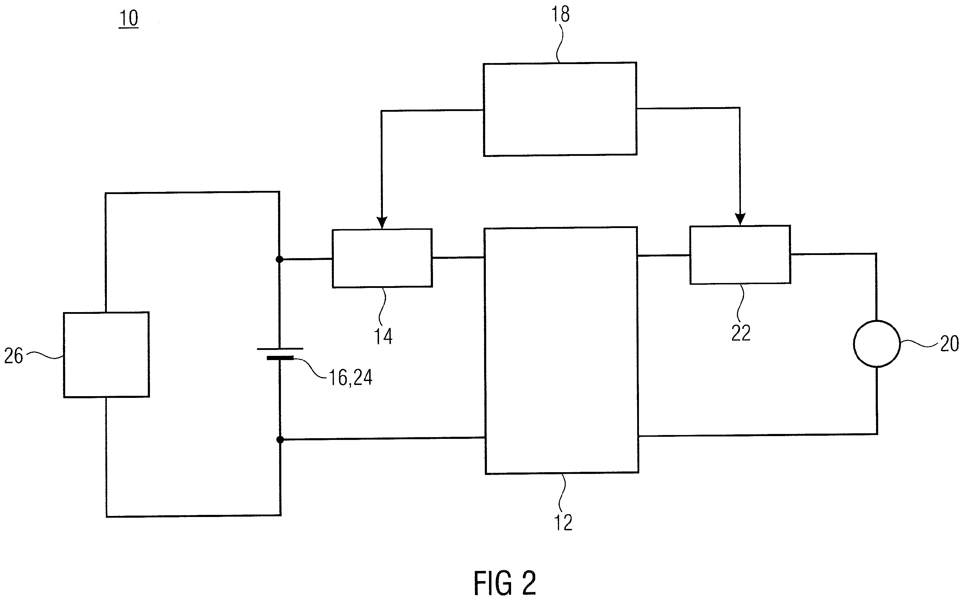

Fig. 2 zeigt eine schematische Darstellung eines weiteren Ausführungsbeispiel eines Schaltungssystems 10 mit einer zweiten Energiequelle 20 und einer zweiten Schalteinheit 22. Durch die zweite Schalteinheit 22 kann in einem ersten Zustand der zweiten Schalteinheit 22, die zweite Energiequelle 20 leitend mit dem Batteriemanagementsystem 12 verbunden sein. In einem zweiten Zustand der zweiten Schalteinheit 22 kann die Energieversorgung des Batteriemanagementsystems 12 aus der zweiten Energiequelle 20 unterbrochen bzw. abgetrennt sein. Die Steuerung 18 kann auch die zweite Schalteinheit 22 steuern.

Für die Ausgestaltung der zweiten Schalteinheit 22 (zweite elektrische Schalteinheit), den ersten und zweiten Zustand der zweiten Schalteinheit 22, sowie für die Steuerung 18 der zweiten Schalteinheit 22 gilt dasselbe wie vorhergehend unter Figur 1a und 1b für die Ausgestaltung der erste Schalteinheit 14 und den ersten und zweiten Zustand der ersten Schalteinheit 14, sowie die Steuerung 18 der ersten Schalteinheit 14 erwähnte.

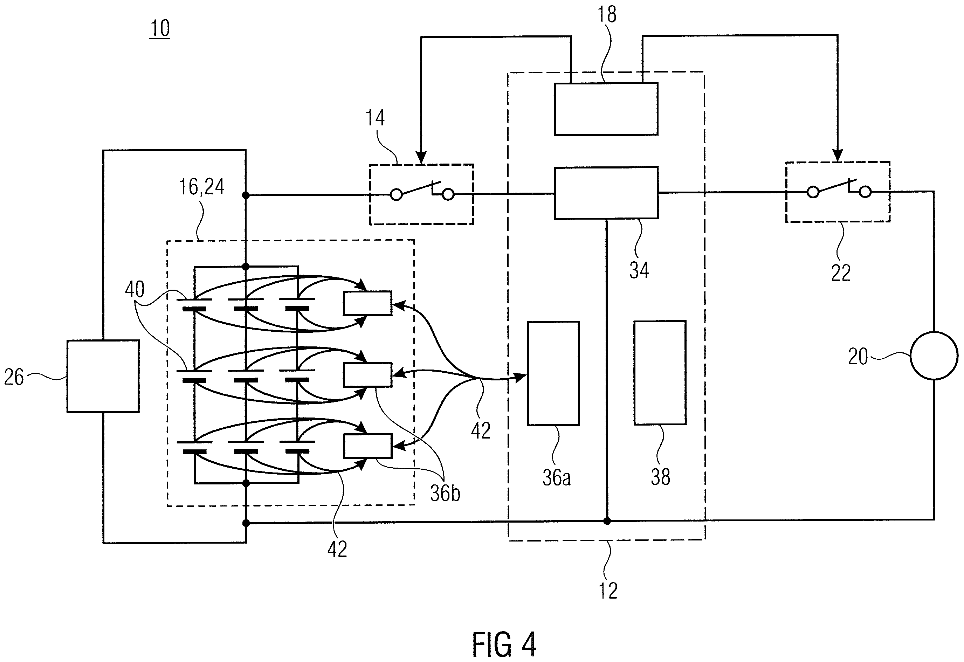

Weiter ist in Fig. 2 ein Batteriesystem 24 als erste Energiequelle 16 gezeigt. Das Batteriesystem 24 wird später noch Bezug nehmend auf Fig. 4 erläutert.

Die zweite Schalteinheit 22 kann wie die erste Schalteinheit 14 über die Steuerung 18 angesteuert werden. Dadurch können die erste und die zweite Energiequellen 16, 20, und damit die gesamte Energieversorgung des Batteriemanagementsystem 12, abgetrennt werden. Dies ermöglicht einen Nullenergieverbrauch des Batteriemanagementsystem 12. Die Steuerung kann derart ausgebildet sein, dass sich beim Öffnen der zweiten Schalteinheit 22 auch die erste Schalteinheit 14 öffnet.

Die zweite Energiequelle 20 kann als Energieversorgungsnetz oder als Bordnetz ausgebildet sein. Als zweite oder externe Energiequelle 20 kann eine beliebige Anordnung, welche als elektrische Energiequelle wirkt, verwendet werden. Bei einem fest installierten Schaltungssystem 10, wie beispielsweise als Teil einer Solaranlage oder einer Windkraftanlage kann die zweite Energiequelle 20 beispielsweise ein lokal vorhandenes Stromnetz eines Energieversorgers sein. Dabei kann das Stromnetz auch ein zusätzliches Netzgerät umfassen. Somit ist eine Energieversorgung des Batteriemanagementsystems 12 durch die zweite Energiequelle 20 über einen längeren Zeitraum möglich. Bei einem Schaltungssystem 10, welches beispielsweise an Bord eines Fahrzeuges installiert ist, kann als zweite Energiequelle 20, ein zweites unabhängiges Bordnetz des Fahrzeuges genutzt werden, an welchem bspw. weitere Steuerungselektronik angeschlossen ist. Ferner ist es auch möglich, als zweite Energiequelle 20 eine Batterie bzw. einen Akkumulator zu verwenden, welche das Batteriemanagementsystem 12 mit Energie versorgt. Durch die Energieversorgung des Batteriemanagementsystems 12 mit einer zweiten Energiequelle 20 kann unabhängig von einem Ladezustand der ersten Energiequelle 16 das Batteriemanagementsystem 12 mit Energie versorgt werden.

Die Steuerung 18 kann ausgebildet sein, um aus der ersten Energiequelle 16 oder einer weiteren Energiequelle mit elektrischer Energie versorgt zu werden. Die Steuerung 18 kann auf einen geringen Energieverbrauch optimiert sein und weist vorzugsweise einen geringeren Energieverbrauch als das Batteriemanagementsystem 12 auf. Durch die Energieversorgung aus der ersten Energiequelle 16 kann ein energieautarker Betrieb des Schaltungssystems 10 erreicht werden. Dabei kann durch einen geringen Energieverbrauch der Steuerung 18 die Entladung der ersten Energiequelle 16 reduziert und damit die Laufzeit des Schaltungssystems 10 erhöht werden. Durch die Versorgung der Steuerung 18 mit Energie aus einer weiteren Energiequelle kann die Steuerung 18 aber auch unabhängig vom Ladezustand der ersten Energiequelle 16 betrieben werden.

In Figur 2 ist ein Mittel 26 gezeigt, welches mit dem Batteriesystem 24 elektrisch verbunden ist. Das Mittel 26 kann ein Verbraucher und/oder ein Erzeuger von elektrischer Energie sein. Verbraucher können beispielsweise der Motor eines Elektrofahrzeugs oder ein elektrisches Haushaltsgerät bzw. das lokale Stromnetz eines Energieversorgers (z.B. über einen Wechselrichter angeschlossen) sein. Erzeuger können bspw. Solar- oder Windkraftanlagen oder ebenfalls ein Stromnetz (z.B. über eine Ladeschaltung angeschlossen) sein. Die Ladeschaltung kann in das Batteriemanagementsystem 10 integriert oder extern dazu sein. Es können auch eine Mehrzahl von Mitteln 26, parallel oder in Serie, an die erste Energiequelle 16 angeschlossen sein. Das Batteriemanagementsystem kann die Zu- und Abschaltung der Mittel 26 steuern (In Figur 2 nicht gezeigt).

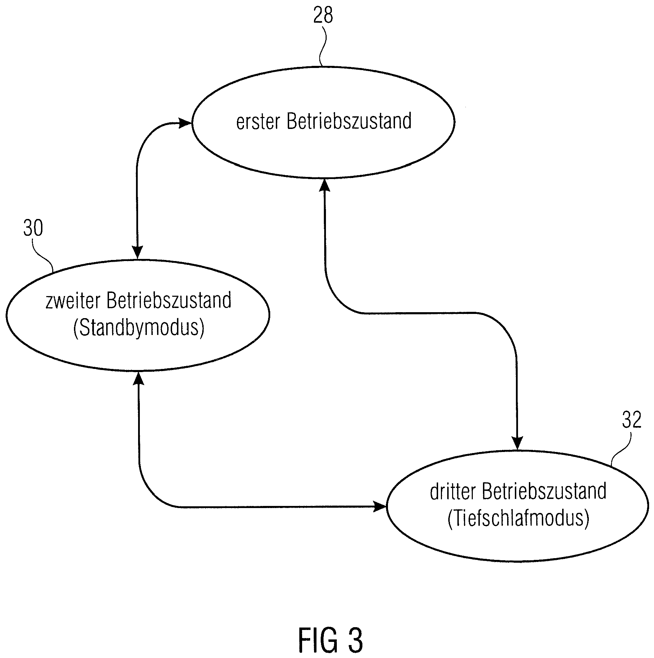

Fig. 3 zeigt einen Zustandsautomaten eines Batteriemanagementsystems 12. Das Batteriemanagementsystem 12 kann ausgebildet sein, verschiedene Betriebszustände anzunehmen.

Das Batteriemanagementsystem 12 kann einen ersten Betriebszustand 28 annehmen, wenn die erste Schalteinheit 14 und die zweite Schalteinheit 22 im ersten Zustand sind. In diesem Zustand sind die erste Energiequelle 16 und die zweite Energiequelle 20 mit dem Batteriemanagementsystem 12 leitend verbunden. Das Batteriemanagementsystem 12 wird dadurch von beiden Energiequellen 16, 20 mit Energie versorgt. Dieser erste Betriebszustand 28 stellt oft den normalen Betriebszustand des Batteriemanagementsystems 12 dar, in welchem das Batteriemanagementsystem voll aktiviert sein kann.

Das Batteriemanagementsystem 12 kann einen zweiten Betriebszustand 30 annehmen, wenn die erste Schalteinheit 14 im zweiten Zustand ist und die zweite Schalteinheit 22 im ersten Zustand ist. In diesem Zustand bezieht das Batteriemanagementsystem 12 keine Energie aus der ersten Energiequelle 16. Das Batteriemanagementsystem 12 wird nur durch die zweite Energiequelle 20 mit Energie versorgt. Das Batteriemanagementsystem 12 wird im zweiten Betriebszustand 30 in einem Standbymodus betrieben. Im zweiten Betriebszustand 30 können gewisse Steuer- oder Überwachungsfunktionen des Batteriemanagementsystems 12 reduziert bzw. ausgeschaltetet sein. Durch den reduzierten Betrieb kann bspw. der Energieverbrauch des Batteriemanagementsystems 12 reduziert werden. Ferner kann, falls bspw. über einen längeren Zeitraum dem Batteriesystem 24 keine Energie zugeführt wird, ein Tiefentladen des Batteriesystems 24 durch das Batteriemanagementsystems 12, welches das Batteriesystem 24 überwacht, vermieden oder zumindest hinausgezögert werden. Dem Tiefentladen des Batteriesystems 24 kann vorgebeugt werden, indem die Energieversorgung des Batteriemanagementsystems 12 soweit als möglich heruntergefahren wird.

Folgende Tabelle zeigt eine Übersicht über die möglichen Schaltzustände der Energieversorgung:

| **Erste Schalteinheit 14** | **Zweite Schalteinheit 22** | **Beschreibung Schaltzustand** |
|---|---|---|
| zweiter Zustand | zweiter Zustand | Das Batteriemanagementsystem 12 verbraucht keine Energie, es findet keine Überwachung statt, beide Schalter sind offen |
| zweiter Zustand | erster Zustand | Die Überwachungseinheit 38 (Kontrolleinheit) des Batteriemanagementsystem 12 ist versorgt, es besteht kein Direktverbrauch aus der ersten Energiequelle 16 (Batteriequelle) |
| erster Zustand | zweiter Zustand | Zustand nicht vorgesehen, es gilt: wenn die zweite Schalteinheit 22 offen ist, dann ist auch die erste Schalteinheit 14 offen |
| erster Zustand | erster Zustand | Beide Schalter sind zu, das Batteriemanagementsystem 12 wird aus der ersten Energiequelle 16 (Batteriequelle) und der zweiten Energiequelle 20 (externen Quelle) versorgt, Vollversorgung |

Die Steuerung 18 kann eine erste Schalteinheit 14 ansteuern, wobei die erste Schalteinheit 14 in einem ersten Zustand die erste Energiequelle 16 mit dem Batteriemanagementsystem 12 verbindet. In einem zweiten Zustand der ersten Schalteinheit 14 wird die Energieversorgung des Batteriemanagementsystems 12 aus der ersten Energiequelle 16 unterbrochen. Ferner kann eine Batterieinformation durch eine Batteriezell-Elektronik 36 (siehe nachfolgende Beschreibung zu Fig. 4) ausgegeben werden. Auf Basis der Batterieinformation kann eine Prüfung, ob die Bedingung zum Wechseln von einem ersten Betriebszustand 28 in einen zweiten Betriebszustand 30 vorliegt, vorgenommen werden. Dabei kann im ersten Betriebszustand 28 die erste Schalteinheit 14 im ersten Zustand vorliegen und im zweiten Betriebszustand 30 die erste Schalteinheit 14 im zweiten Zustand vorliegen. Die Steuerung 18 wird angewiesen von dem ersten Betriebszustand 28 in den zweiten Betriebszustand 30 zu wechseln, wenn bestimmte Voraussetzungen erfüllt sind.

Aufgrund dieser Beschaltung ist es möglich, das Batteriemanagementsystems 12 vom ersten Betriebszustand 28 in einen zweiten Betriebszustand 30 (Standbyzustand) zu versetzen, in dem kein direkter Verbrauch aus dem Batteriesystem selbst stattfindet. Ein Wechsel vom ersten Betriebszustand 28 in den zweiten Betriebszustand 30 kann bspw. beim Erreichen oder Unterschreiten einer gewissen Schwellwertspannung des Batteriesystems 24 ausgeführt werden.

Zusätzlich kann das Batteriemanagementsystems 12 einen dritten Betriebszustand 32 (Tiefschlafmodus) annehmen, wenn die erste Schalteinheit 14 und die zweite Schalteinheit 22 im zweiten Zustand sind, d.h. komplett abgetrennt. Ein Zustandswechsel erfolgt durch ein entsprechendes Schalten der Energiequellen 16, 20 (Versorgungsquellen) des Batteriemanagementsystems 12. In diesem Zustand bezieht das Batteriemanagementsystem 12 keine Energie aus der ersten Energiequelle 16 oder der zweiten Energiequelle 20. Es ist möglich in diesem dritten Betriebszustand 32 durch eine weitere Energiequelle, bspw. einem Kondensator, gewisse Funktionen des Batteriemanagementsystems 12 wie beispielsweise eine Aufwachfunktion für das Batteriemanagementsystem 12, weiter zu betreiben. Der dritte Betriebszustand 32 kann auf einen möglichst geringen Energieverbrauch des Batteriemanagementsystems 12 ausgelegt sein.

Das Batteriemanagementsystem 12 kann von jedem der drei Betriebszustände 28, 30, 32 in einen folgenden Betriebszustand 28, 30, 32 wechseln. So kann beispielsweise aus dem dritten Betriebszustand 32 des Batteriemanagementsystems 12, durch das Zuschalten der ersten und der zweiten Energiequelle 16, 20, in den ersten Betriebszustand 28 des Batteriemanagementsystems 12 gewechselt werden.

Der Wechsel von einem Betriebszustand 28, 30, 32 zu einem folgenden Betriebszustand 28, 30, 32 kann von gewissen Voraussetzungen abhängen. Dies kann bspw. eine Zeitdauer oder ein Zeitpunkt sein. So kann bspw. das Batteriemanagementsystem 12 eine Stunde nachdem keine Energie zu der ersten Energiequelle 16 zu- oder abgeflossen ist, vom ersten Betriebszustand 28 in den zweiten Betriebszustand 30 wechseln. Auch ist es möglich, dass nach einer bestimmten Zeitdauer oder zu einem bestimmten Zeitpunkt das Batteriemanagementsystem 12 vom zweiten Betriebszustand 30 beispielsweise für eine relativ kurze Zeitdauer in den ersten Betriebszustand 28 zurückkehrt, um z.B. eine Zustandsüberwachung der einzelnen Batteriezellen durchzuführen. Ebenso ist es denkbar, dass das Batteriemanagementsystem 12 nach einer bestimmten Zeitdauer oder zu einem bestimmten Zeitpunkt vom ersten Betriebszustand 28 in den dritten Betriebszustand 30 wechselt. Weitere Voraussetzungen für den Wechsel des Betriebszustandes 28, 30, 32 kann ein Ladezustand oder eine Spannung sein. Wenn bspw. die erste Spannungsquelle 16 eine vorgegebenen Spannung unterschreitet, kann das Batteriemanagementsystem 12 vom ersten Betriebszustand 28 in den zweiten oder dritten Betriebszustand 30, 32 wechseln.

Fig. 4 zeigt eine schematische Darstellung eines weiteres Ausführungsbeispiel eines Schaltungssystems 10. In dem Ausführungsbeispiel ist die Steuerung 18 als Teil des Batteriemanagementsystems 12 ausgebildet. Die Steuerung 18 stellt somit eine sich direkt auf dem Batteriemanagementsystems 12 befindliche Kontrolleinheit dar, welche in der Lage ist, mögliche Arten von Schaltern (Schalteinheiten 14, 22) anzusteuern. Auch die erste und zweite Schalteinheit 14, 22 könnten als Teil des Batteriemanagementsystems 12 ausgebildet sein (In Fig. 4 nicht gezeigt). Durch die Integration der Steuerung 18 und der möglichen Integration der ersten und zweiten Schalteinheit 14, 22, können zusätzliche Installationen, wie beispielsweise Kabel und Gehäuse, an dem Schaltungssystem 10 vermieden und Installationsaufwand und Kosten gesenkt werden.

Das Schaltungssystem 10 kann eine Schutzschaltung 34 aufweisen, welche ausgebildet ist eine Stromstärke zwischen der ersten Energiequelle 16 und der zweiten Energiequelle 20 auf einen zulässigen Maximalwert oder im Wesentlichen auf null zu begrenzen. Um das Batteriemanagementsystem 12 oder Teile davon aus verschiedenen Energiequellen mit Strom zu versorgen, kann eine Schutzschaltung 34 vorgesehen werden, welche verhindert, dass im ersten Betriebszustand 28 des Batteriemanagementsystems 12 eine unkontrollierte Ladungsverschiebung zwischen den Energiequellen 16, 20 auftritt. Die Schutzschaltung 34 kann beispielsweise aus Dioden abgebaut sein, welche einen Stromfluss in eine Richtung zulassen und in die Gegenrichtung verhindern. Dadurch kann die Schutzschaltung 34 bspw. verhindern, dass die erste Energiequelle 16 durch die zweite Energiequelle 20 mit Energie versorgt wird bzw. die erste Energiequelle 16 Energie an die zweite Energiequelle 20 abgibt.

Das Batteriemanagementsystem 12 kann mindestens eine Batteriezell-Elektronik 36a, 36b und eine Überwachungseinheit 38 umfassen. Die Batteriezell-Elektronik 36a, 36b kann Batterieinformationen 42 wie beispielsweise Strom, Spannung oder Temperatur einer Batteriezelle oder eines Batteriesystems ermitteln. Die Batteriezell-Elektronik 36a, 36b kann ferner Zellsymmetrierung (Cell Balancing) bei Batteriezellen vornehmen, d.h. es wird ein Ausgleich des Ladezustands zwischen den Batteriezellen vorgenommen. Die Batteriezell-Elektronik 36a, 36b wird auch als Front End bezeichnet.

In der Fig. 4 sind verschiedene Ausführungsbeispiele einer Batteriezell-Elektronik 36a, 36b gezeigt. Die Batteriezelle-Elektronik 36b kann bspw. an einem vom Batteriemanagementsystem 12 entfernten Ort oder direkt im Batteriemanagementsystem als Batteriezelle-Elektronik 36a angeordnet sein. Mit "vom Batteriemanagementsystem 12 entfernten Ort" kann bspw. nahe an oder bei einer Batteriezelle 40 oder einer Gruppe von bspw. 12 Batteriezellen 40 gemeint sein. Die Batteriezell-Elektronik 36a, 36b kann direkt aus den Batteriezellen 40 mit Energie versorgt werden. Die Batteriezelle-Elektronik 36a, 36b kann Batterieinformationen 42 ermitteln. Abhängig von der Architektur des Batteriesystems 24 können auch mehrere Batteriezell-Elektroniken 36a, 36b Batterieinformationen 42 erfassen und/oder Batterieinformationen 42 untereinander über ein Kommunikationssystem austauschen.

Die Überwachungseinheit 38 kann aus einem Mikrocontroller o.ä. bestehen, auf welchem entsprechende Hostfunktionen wie die Zustandsbestimmung des Batteriesystems 24 (State of Charge SOC; State of Health SOH), ein Fehlermanagement, ein thermisches Management zur Regelung eines Kühlsystems sowie diverse Kommunikationsschnittstellen und ein Lastmanagement implementiert sein können. Die Überwachungseinheit 38 kann dazu beispielsweise auf Temperaturmesskanäle und entsprechende Kommunikationsmodule für einen Datenaustausch mit bspw. der Batterie-Elektronik 36a, 36b, der Steuerung 18 oder anderen Modulen wie externer Überwachungssystemen zugreifen. Die Überwachungseinheit 38 wird auch als Controller bezeichnet.

Das Batteriemanagementsystem 12 kann ausgebildet sein, dass die Batteriezell-Elektronik 36 und die Überwachungseinheit 38 von zwei unterschiedlichen Energiequellen versorgt werden. Die Batteriezell-Elektronik 36 kann dabei aus der ersten Energiequelle 16 mit Energie versorgt werden. Die Überwachungseinheit 38 kann von der zweiten Energiequelle 20, mit Energie versorgt werden. Durch die Energieversorgung des Batteriemanagementsystems 12 aus verschiedenen Energiequellen, kann beispielsweise die Energieversorgung von Teilen des Batteriemanagementsystems 12 vom vorhandenen Energievorrat in der ersten Energiequelle 16 unabhängig gemacht werden. So kann bspw. bei geringem Energievorrat in der ersten Energiequelle 16 das Batteriemanagementsystem 12 oder Teile davon aus der zweiten Energiequelle 20 mit Energie versorgt werden. Bspw. ist dadurch eine Ansteuerung von der ersten Schalteinheit 14 durch das Batteriemanagementsystem 12 möglich. Die Überwachungseinheit 38 (Kontrolleinheit) des Batteriemanagementsystem 12 bleibt versorgt ohne Energieverbrauch direkt aus der ersten Energiequelle 16. Es wird vermieden, dass die erste Energiequelle 16 weiter entladen wird. Es ist aber möglich zB zu bestimmten Zeiten ein kurzes Einschalten der Batteriezell-Elektronik 36 bzw. ein temporäres Aufwachen (erster Betriebszustand 28) zu ermöglichen.

Das Batteriesystem 24 kann aus einer oder mehreren Batteriezellen 40 aufgebaut sein. Die Batteriezellen 40 können elektrisch in Reihe geschaltet sein. Dadurch wird eine höhere Spannung für das Batteriesystem 24 erzielt. Außerdem können die Batteriezellen 40 parallel zueinander geschaltet sein. Dadurch ergibt sich für das Batteriesystem 24 eine höhere Kapazität. Eine Kombination zwischen in Reihe und parallel geschalteten Batteriezellen ist ebenfalls möglich.

Das Batteriemanagementsystem 12 kann ausgebildet sein, um aufgrund einer von der Batterie-Elektronik 36a, 36b ausgegebenen Batterieinformationen 42 und einer von der Überwachungseinheit 38 ausgegebenen Überwachungsinformation eine Steuerinformation zu generieren und die Steuerinformation an die Steuerung 18 zu übertragen. Die Steuerinformation kann in der Folge, beispielsweise mittels eines Datenbusses, an die erste Schalteinheit 14 oder an die zweite Schalteinheit 22 ausgegeben werden. Die Schalteinheiten 14, 22 können aufgrund der Steuerinformation ihren Zustand ändern. Beispielsweise kann ein als Schalteinheit 14, 22 in Fig. 4 gezeigte Öffner, von einem ersten leitenden Zustand in einen zweiten nicht leitenden Zustand wechseln.

Das Batteriemanagementsystem 12 kann ausgebildet sein festzustellen, dass kein Energiezufluss zu der ersten Energiequelle 16 stattfindet und dass kein Energieabfluss aus der ersten Energiequelle 16 stattfindet und folglich einen Wechsel vom ersten Betriebszustand 28 (z.B. Normalbetrieb) des Batteriemanagementsystems 12 in den zweiten Betriebszustand 30 (z.B. Standbybetrieb) des Batteriemanagementsystems 12 veranlassen. Das Schaltungssystem 10 kann für den Betrieb des Batteriesystems 24 verwendet werden. Dabei können alternierend Lade- und Entladevorgänge in denen Energie zu dem Batteriesystems 24 zu- oder abfließt, stattfinden. Während des Zu- oder Abfließens von Energie kann das Batteriemanagementsystem 12 im ersten Betriebszustand 28 sein, um auf sich ändernde Parameter wie beispielsweise Energieflussrichtung oder Energieflussgröße, Temperatur des Batteriesystems 24 oder des Ladezustand des Batteriesystems 24 reagieren zu können. Wenn kein Energie Zu- oder Abfluss stattfindet, kann das Batteriemanagementsystem 12 von einem ersten Betriebszustand 28 in einen zweiten Betriebszustand 30 wechseln, um dadurch der ersten Energiequelle 16 keine Energie zu entziehen.

Bei den offenbarten Ausführungsbeispielen kann es sich um ein Batteriemanagementsystem 12 handeln, welches durch interne und externe Kontrolle vom zu überwachenden Objekt Batteriezelle 40 oder Batteriesystem 24 (Batterieeinheit) vollständig abtrennbar ist. Damit sind ein Nullenergieverbrauch und eine schrittweise Reduzierung des Energieverbrauchs innerhalb des Batteriesystems 24 möglich. Das System kann über zwei Schalteinheiten 14, 22 (Schalter) verfügen, welche vom Batteriemanagementsystem 12 (BMS) intern und extern von einer anderen elektrischen Kontrolleinheit (Steuerung18) angesteuert werden. Dadurch besteht die Möglichkeit, den Energieverbrauch des Batteriemanagementsystem 12 (BMS) direkt aus dem Batteriesystem 24 (Batteriequelle) und/oder den Energieverbrauch aus einer zweiten Energiequelle 20 (externen Quelle) zu schalten.

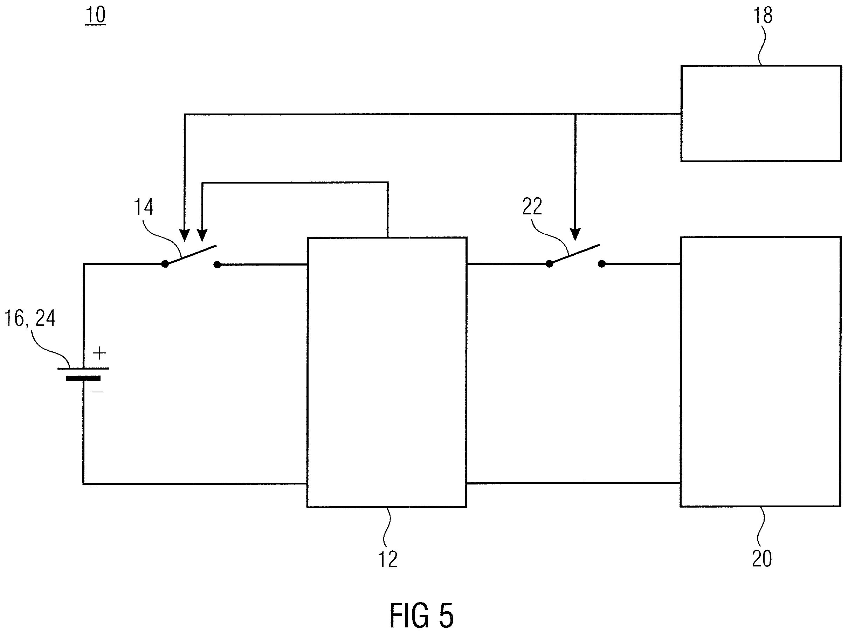

Fig. 5 zeigt eine schematische Darstellung eines weiteren Ausführungsbeispiel eines Schaltungssystem 10. Das Schaltungssystem 10 umfasst das Batteriemanagementsystem 12 und die erste Schalteinheit 14, welche im ersten Zustand das Batteriesystem 24 leitend mit dem Batteriemanagementsystem 12 verbindet und im zweiten Zustand die Energieversorgung des Batteriemanagementsystem 12 aus dem Batteriesystem 24 (oder allgemein: der ersten Energiequelle 16) unterbricht. Die zweite Schalteinheit 22 verbindet im ersten Zustand eine zweite Energiequelle 20 leitend mit dem Batteriemanagementsystem 12 und unterbricht im zweiten Zustand die Energieversorgung des Batteriemanagementsystem 12 aus der zweiten Energiequelle 20. Ferner umfasst das Schaltungssystem 10 die Steuerung 18, die die erste und zweite Schalteinheit 14, 22 steuert.

Alternativ kann die Steuerung 18 in das Batteriemanagementsystem 12 integriert sein und bspw. (wie mit Pfeil von 12 zu 14 angedeutet) nur die erste Schalteinheit 14 steuern. Das Schaltungssystem 10 kann einen Massebezug aufweisen.

Im Folgenden wird ein Ausführungsbeispiel eines Batteriemanagementsystem 12 beschrieben. Beispielhaft sei ein Batteriemanagementsystem 12 genannt, welches für die Überwachung von 12 in Reihe geschalteten Batteriezellen 40 verantwortlich ist. Das BMS 12 verfügt über eine Batteriezell-Elektronik 36 (Front End Beschaltung) direkt an einem Batteriezellverbund. Diese übernimmt die Spannungsmessung und die Zellsymmetrierung (Cell Balancing) der Batteriezellen 40, sie wird direkt aus der Batterie (ersten Energiequelle 16) selbst versorgt. Außerdem verfügt das BMS 12 über eine Überwachungseinheit 38 (Controllerteil), welcher aus einem Mikrocontroller, mehreren Temperaturmesskanälen und entsprechenden Kommunikationsmodulen für einen Datenaustausch mit externen Überwachungssystemen besteht. Die Überwachungseinheit 38 (Controllerteil) wird von einer externen Energiequelle (zweite Energiequelle 20) gespeist. Die externe Energiequelle sei eine herkömmliche 230 VAC Versorgung. Die Anwendung sei ein netzgekoppeltes Solar Horne System, das Batteriesystem 24 dient als Zwischenspeicher für die Solarenergie und stellt entsprechend gespeicherte Energie zur Verfügung, wenn sie benötigt wird. Ein Gesamtbatteriesystem kann mehrere solcher beschriebenen Batteriesysteme 24 (Batterien) zusammen mit einer übergeordneten Überwachungseinheit 38 enthalten. Im zweiten Betriebszustand 30 (Standbymodus) wird das Batteriesystem 24 (Batterie) vom BMS 12 selbst über eine erste Schalteinheit 14 (Schalter) abgetrennt und damit die Batteriezell-Elektronik 36 (Front End Beschaltung) ausser Betrieb gesetzt. Das BMS 12 kann jederzeit wieder in den ersten Betriebszustand 28 versetzt werden, liefert jedoch im zweiten Betriebszustand 30 keine Messdaten der Batteriezellelektronik 36, da diese abgeschaltet ist und keinen Stromverbrauch mehr hat. Das BMS kann durch die Steuerung 18 und die zweite Schalteinheit 22, gesteuert von der übergeordneten Überwachungseinheit 38 von der 230 VAC Versorgung (zweite Energiequelle 22) zusätzlich abgetrennt werden. Dann ist es im dritten Betriebszustand 32 (Tiefschlafmodus) und verbraucht praktisch keine Energie mehr.

Ausführungsbeispiele weisen verschiedene Vorteile auf. Dabei besteht die Wirkung in der intelligenten Abschaltung durch das BMS 12 System selbst und/oder der Steuerung 18 (übergeordneten externe Einheit).
1. Eine erhöhte Selbstentladung des Batteriesystems 24 (erste Energiequelle 16: Batteriezelle 40 oder Batterieeinheit) bzw. ein erhöhter Energieverbrauch aus einer ersten Energiequelle 16 wird eingedämmt und die Energieeffizienz solcher Schaltungssysteme 10 wird gesteigert. Dies ist vor allem bei Batterieversorgungssystemen von großer Bedeutung.
2. Ausführungsbeispiele haben eine bessere Wartbarkelt von Schaltungssystemen 10 zur Folge. Längere Zeiten des Stillstands können ohne regelmäßige Prüfung des Batteriesystems 24 (Batteriequelle) hingenommen werden. Eine mechanische Abtrennung der BMS 12 Elektronik von dem Batteriesystems 24 (Batterie) bei voraussehbaren längeren Stillstand ist nicht mehr notwendig. Bei einem unvorhergesehenen längeren Stillstand ist das Risiko einer Tiefentladung wesentlich reduziert.
3. Die Sicherheit solcher Schaltungssysteme 10 wird dadurch erhöht, dass einer Tiefentladung durch Selbstentladung durch das BMS 12 von vorn herein vorgebeugt wird, indem sich das BMS 12 intelligent im zweiten Betriebszustand 30 (Standbymodus) in den dritten Betriebszustand 32 (vollständige Abschaltung) abschalten kann, falls es einen niedrigen Batterieladezustand erkennt.
4. Ein gesenkter Energieverbrauch und erhöhte Effizienz bringt in der Regel wirtschaftliche Vorteile mit sich und schont die Umwelt.

Ausführungsbeispiele können alle möglichen BMS 12 Varianten abdecken: BMS mit Cell Balancing, Temperaturmessung, Spannungsmessung, Zustandsbestimmung (SOC, SOH), Fehlermanagement, Kommunikation. Weiter können mögliche externe Kontrolleinheiten (bspw. erste und/oder zweite Schalteinheit 14, 22, Steuerung 18, Schutzschaltung 34, Batteriezell-Elektronik 36, Überwachungseinheit 40) auf dem BMS 12 selbst integriert oder voneinander abgesetzt ausgebildet sein (alles auf eine Platine oder alles auftrennen). Ein Batteriemanagementsystem 12 kann weitere Funktionen oder Module wie bspw. eine Steuerung für ein Kühlsystem, ein Sicherheitssystem oder eine Ethernet-Benutzerschnittstelle enthalten. Funktionen können auch vom Batteriemanagementsystem 12 nicht erfasst oder von zusätzlichen Modulen extern erfasst werden. Es kann innerhalb des Batteriemanagementsystem 12 eine galvanische Trennung zwischen verschiedenen Modulen bestehen. Vorzugsweise besteht eine galvanische Trennung zwischen der Batteriezell-Elektronik 36 und der Überwachungseinheit 38.

Bei Ausführungsbeispielen kann die integrierte Elektronik des Batteriemanagementsystem 12 von der direkten Batterieversorgung (ersten Energiequelle 16) abgetrennt werden. Der direkte Energieverbrauch der in einem Batteriesystem 24 integrierten Elektronik (des Batteriemanagementsystem 12) ist fast oder gleich null in bestimmten Zuständen (dritten Betriebszustand 32).

Anwendungsgebiete von Batteriesystemen 24 können sein: Speichersysteme in Verbindung mit Photovoltaik, Biogasanlagen, Windkraftanlagen, Wasserkraftanlagen für autarke Stromversorgungssysteme oder für netzintegrierte Systeme (Anwendung im Einfamilien- und Mehrfamilienhäusern oder in Dörfern und Städten) sowie Traktionsbatterien von Elektrofahrzeugen. Darüber hinaus alle anderen Einsatzgebiete für Speichersysteme, welche chemische Speicher beinhalten. Der Batterietyp ist frei wählbar. Neben Lithium-Ionen Batteriezellen können auch andere Typen wie Nickel-Cadmium Batterien, Bleibatterien, Hochtemperaturbatterien oder Redox-Flow Batterien verwendet werden. Die Ausführungsbeispiele können neben Batteriesystemen 24 auch in anderen Versorgungssystemen eingesetzt werden, um Energie einzusparen und elektrische Versorgungssysteme wirtschaftlicher zu machen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder einer elektronischen Schaltung durchgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmier-baren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinen-lesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.
- 10: Schaltungssystem
- 12: Batteriemanagementsystem
- 14: erste Schalteinheit
- 16: erste Energiequelle
- 18: Steuerung
- 20: zweite Energiequelle
- 22: zweite Schalteinheit
- 24: Batteriesystem
- 26: Mittel
- 28: erster Betriebszustand
- 30: zweiter Betriebszustand
- 32: dritter Betriebszustand
- 34: Schutzschaltung
- 36: Batteriezell-Elektronik
- 38: Überwachungseinheit
- 40: Batteriezellen
- 42: Batterieinformationen

## Patentansprüche

1. Schaltungssystem (10) umfassend;
ein Batteriemanagementsystem (12),
eine erste Schalteinheit (14), welche in einem ersten Zustand eine erste Energiequelle (16) leitend mit dem Batteriemanagementsystem (12) verbindet und in einem zweiten Zustand öffnet, um die Energieversorgung des Batteriemanagementsystem (12) aus der ersten Energiequelle (16) zu unterbrechen,
eine zweite Schalteinheit (22), welche in einem ersten Zustand eine zweite Energiequelle (20) leitend mit dem Batteriemanagementsystem (12) verbindet und in einem zweiten Zustand öffnet, um die Energieversorgung des Batteriemanagementsystem (12) aus der zweiten Energiequelle (20) zu unterbrechen, und
eine Steuerung (18), die die erste Schalteinheit (14) und die zweite Schalteinheit (22) steuert,
wobei das Batteriemanagementsystem (12) mindestens eine Batteriezell-Elektronik (36), die ausgebildet ist, um von der ersten Energiequelle (16) mit Energie versorgt zu werden, und eine Überwachungseinheit (38), die ausgebildet ist, um von der zweiten Energiequelle (20) mit Energie versorgt zu werden, umfasst,
**dadurch gekennzeichnet, dass**
die Steuerung (18) ausgebildet ist, um die erste Schalteinheit (14) und die zweite Schalteinheit (22) derart zu steuern, dass gilt: wenn die zweite Schalteinheit (22) in dem zweiten Zustand ist, dann ist auch die erste Schalteinheit (14) in dem zweiten Zustand.

2. Schaltungssystem (10) nach Anspruch 1, wobei die erste Energiequelle (16) ein Batteriesystem (24) ist, welches durch das Batteriemanagementsystem (12) kontrolliert ist.

3. Schaltungssystem (10) nach Anspruch 1 oder 2, wobei die zweite Energiequelle (20) als Energieversorgungsnetz oder Bordnetz ausgebildet ist.

4. Schaltungssystem (10) nach einem der Ansprüche 1 bis 3, wobei das Schaltungssystem (10) eine Schutzschaltung (34) aufweist, welche ausgebildet ist eine Stromstärke zwischen der ersten Energiequelle (16) und der zweiten Energiequelle (20) auf einen zulässigen Maximalwert oder im Wesentlichen auf Null zu begrenzen.

5. Schaltungssystem (10) nach einem der vorangehenden Ansprüche, wobei die Steuerung (18) ausgebildet ist, um aus der ersten Energiequelle (16) oder einer weiteren Energiequelle mit elektrischer Energie versorgt zu werden.

6. Schaltungssystem (10) nach einem der vorangehenden Ansprüche, wobei die Steuerung (18) als Teil des Batteriemanagementsystem (12) ausgebildet ist.

7. Schaltungssystem (10) nach einem der vorangehenden Ansprüche, wobei die Batteriezell-Elektronik (36) an einem vom Batteriemanagementsystem (12) entfernten Ort angeordnet ist.

8. Schaltungssystem (10) nach einem der vorangehenden Ansprüche, wobei das Batteriemanagementsystem (12) ausgebildet ist, verschiedene Betriebszustände anzunehmen, wobei das Batteriemanagementsystem (12)
- einen ersten Betriebszustand (28) annimmt, wenn die erste Schalteinheit (14) und die zweite Schalteinheit (22) im ersten Zustand sind,
- einen zweiten Betriebszustand (30) annimmt, wenn die erste Schalteinheit (14) im zweiten Zustand ist und die zweite Schalteinheit (22) im ersten Zustand ist,
- einen dritten Betriebszustand (32) annimmt, wenn die erste Schalteinheit (14) und die zweite Schalteinheit (22) im zweiten Zustand sind.

9. Schaltungssystem (10) nach einem der vorangehenden Ansprüche, wobei das Batteriemanagementsystem (12) ausgebildet ist, um aufgrund einer von der Batteriezell-Elektronik (36) ausgegebenen Batterieinformation und einer von der Überwachungseinheit (38) ausgegebene Überwachungsinformation eine Steuerinformation zu generieren und die Steuerinformation an die Steuerung (18) zu übertragen.

10. Schaltungssystem (10) nach Anspruch 9, wobei das Batteriemanagementsystem (12) ausgebildet ist festzustellen, dass
- kein Energiezufluss zu der ersten Energiequelle (16) stattfindet; und
- kein Energieabfluss aus der ersten Energiequelle (16) stattfindet
und folglich einen Wechsel von einem ersten Betriebszustand (28) des Batteriemanagementsystems (12) in einen zweiten Betriebszustand (30) des Batteriemanagementsystems (12) zu veranlassen.

11. Verfahren zum Beschalten einer Energieversorgung eines Batteriemanagementsystems (12), wobei das Verfahren folgende Schritte aufweist:
Ansteuern einer ersten Schalteinheit (14) und einer zweiten Schalteinheit (22) durch eine Steuerung (18), wobei das Ansteuern folgendes umfasst:
- Verbinden einer ersten Energiequelle (16) mit mindestens einer Batteriezell-Elektronik (36) des Batteriemanagementsystems (12) durch die erste Schalteinheit (14) in einem ersten Zustand;
- Unterbrechen der Energieversorgung der Batteriezell-Elektronik (36) des Batteriemanagementsystem (12) aus der ersten Energiequelle (16) in einem zweiten Zustand der ersten Schalteinheit (14), in dem die erste Schalteinheit (14) öffnet,
- Verbinden einer zweiten Energiequelle (20) mit einer Überwachungseinheit (38) des Batteriemanagementsystems (12) durch die zweite Schalteinheit (22) in einem ersten Zustand; und
- Unterbrechen der Energieversorgung der Überwachungseinheit (38) des Batteriemanagementsystem (12) aus der zweiten Energiequelle (20) in einem zweiten Zustand der zweite Schalteinheit (22), in dem die zweite Schalteinheit (22) öffnet,
**dadurch gekennzeichnet, dass**
die erste Schalteinheit (14) und die zweite Schalteinheit (22) derart gesteuert werden, dass gilt: wenn die zweite Schalteinheit (22) in dem zweiten Zustand ist, dann ist auch die erste Schalteinheit (14) in dem zweiten Zustand.

12. Verfahren nach Anspruch 11, weiter umfassend,
Ausgeben einer Batterieinformation durch eine Batteriezell-Elektronik (36);
Prüfen auf der Basis der Batterieinformation, ob Bedingungen zum Wechseln von einem ersten Betriebszustand (28) in einen zweiten Betriebszustand (30) vorliegen, wobei
- im ersten Betriebszustand (28) die erste Schalteinheit (14) im ersten Zustand vorliegt und;
- im zweiten Betriebszustand (30) die erste Schalteinheit (14) im zweiten Zustand vorliegt;
Anweisen der Steuerung (18), vom ersten Betriebszustand (28) in den zweiten Betriebszustand (30) zu wechseln.

13. Computerprogramm mit einem Programmcode zur Durchführung des Verfahrens nach Anspruch 11 oder 12, wenn das Computerprogramm auf einem Computer oder Prozessor abläuft.

## Claims

1. Circuit system (10) including;
a battery management system (12),
a first switch unit (14) which in a first state conductively connects a first energy source (16) to the battery management system (12) and opens in a second state to disconnect the energy supply of the battery management system (12) from the first energy source (16),
a second switch unit (22), which in a first state conductively connects a second energy source (20) to the battery management system (12) and opens in a second state to disconnect the energy supply of the battery management system (12) from the second energy source (20), and
a controller (18) which controls the first switch unit (14) and the second switch unit (22),
the battery management system (12) including at least one unit of battery-cell electronics (36) configured to be supplied with energy by the first energy source (16), and a monitoring unit (38) configured to be supplied with energy by the second energy source (20),
**characterized in that**
the controller (18) is configured to control the first switch unit (14) and the second switch unit (22) such that the following applies: when the second switch unit (22) is in the second state, the first switch unit (14) will also be in the second state.

2. Circuit system (10) as claimed in claim 1, wherein the first energy source (16) is a battery system (24) controlled by the battery management system (12).

3. Circuit system (10) as claimed in claim 1 or 2, wherein the second energy source (20) is configured as an energy supply network or an on-board power supply.

4. Circuit system (10) as claimed in any of claims 1 to 3, the circuit system (10) comprising a protective circuit (34) configured to limit a current intensity that is present between the first energy source (16) and the second energy source (20) to an admissible maximum value or essentially to zero.

5. Circuit system (10) as claimed in any of the previous claims, wherein the controller (18) is configured to be supplied with electric energy from the first energy source (16) or a further energy source.

6. Circuit system (10) as claimed in any of the previous claims, wherein the controller (18) is configured as part of the battery management system (12).

7. Circuit system (10) as claimed in any of the previous claims, wherein the battery-cell electronics (36) is arranged at a location remote from the battery management system (12).

8. Circuit system (10) as claimed in any of the previous claims, wherein the battery management system (12) is configured to adopt various operating states, the battery management system (12)
- adopting a first operating state (28) when the first switch unit (14) and the second switch unit (22) are in the first state,
- adopting a second operating state (30) when the first switch unit (14) is in the second state and the second switch unit (22) is in the first state,
- adopting a third operating state (32) when the first switch unit (14) and the second switch unit (22) are in the second state.

9. Circuit system (10) as claimed in any of the previous claims, wherein the battery management system (12) is configured to generate, on account of battery information output by the battery-cell electronics (36) and of monitoring information output by the monitoring unit (38), control information and to transfer said control information to the controller (18).

10. Circuit system (10) as claimed in claim 9, wherein the battery management system (12) is configured to ascertain that
- no energy is flowing to the first energy source (16); and
- no energy is flowing out of the first energy source (16)
and to consequently cause a change from a first operating state (28) of the battery management system (12) to a second operating state (30) of the battery management system (12).

11. Method of wiring an energy supply system of a battery management system (12), the method comprising:
controlling a first switch unit (14) and a second switch unit (22) on the part of a controller (18), said controlling including:
- connecting a first energy source (16) to at least one unit of battery-cell electronics (36) of the battery management system (12) on the part of the first switch unit (14) in a first state;
- disconnecting the energy supply of the battery-cell electronics (36) of the battery management system (12) from the first energy source (16) in a second state of the first switch unit (14) in which the first switch unit (14) opens.
- connecting a second energy source (20) to a monitoring unit (38) of the battery management system (12) on the part of the second switch unit (22) in a first state; and
- disconnecting the energy supply of the monitoring unit (38) of the battery management system (12) from the second energy source (20) in a second state of the second switch unit (22) in which the second switch unit (22) opens,
**characterized in that**
the first switch unit (14) and the second switch unit (22) are controlled such that the following applies: when the second switch unit (22) is in the second state, the first switch unit (14) will also be in the second state.

12. Method as claimed in claim 11, further including,
outputting battery information on the part of battery-cell electronics (36);
testing, on the basis of the battery information, whether or not the conditions for changing from a first operating state (28) to a second operating state (30) are met, wherein
- in the first operating state (28), the first switching unit (14) is in the first state; and
- in the second operating state (30), the first switch unit (14) is in the second state;
instructing the controller (18) to change from the first operating state (28) to the second operating state (30).

13. Computer program having a program code for performing the method as claimed in claim 11 or 12, when the computer program runs on a computer or processor.

## Revendications

1. Système de commutation (10), comprenant;
un système de gestion de batterie (12),
une première unité de commutation (14) qui, dans un premier état, connecte de manière conductrice une première source d'énergie (16) au système de gestion de batterie (12) et, dans un deuxième état, s'ouvre pour interrompre l'alimentation en énergie du système de gestion de batterie (12) depuis la première source d'énergie (16),
une deuxième unité de commutation (22) qui, dans un premier état, connecte de manière conductrice une deuxième source d'énergie (20) au système de gestion de batterie (12) et, dans un deuxième état, s'ouvre pour interrompre l'alimentation en énergie du système de gestion de batterie (12) depuis la deuxième source d'énergie (20), et
un moyen de commande (18) qui commande la première unité de commutation (14) et la deuxième unité de commutation (22),
dans lequel le système de gestion de batterie (12) comporte au moins une électronique de cellule de batterie (36) qui est réalisée pour être alimentée en énergie par la première source d'énergie (16) et une unité de surveillance (38) qui est réalisée pour être alimentée en énergie par la deuxième source d'énergie (20),
**caractérisé par le fait que**
le moyen de commande (18) est réalisé pour commander la première unité de commutation (14) et la deuxième unité de commutation (22) de sorte que soit d'application: lorsque la deuxième unité de commutation (22) se trouve dans le deuxième état, la première unité de commutation (14) se trouve également dans le deuxième état.

2. Système de commutation (10) selon la revendication 1, dans lequel la première source d'énergie (16) est un système de batterie (24) qui est commandé par le système de gestion de batterie (12).

3. Système de commutation (10) selon la revendication 1 ou 2, dans lequel la deuxième source d'énergie (20) est réalisée comme un réseau d'alimentation en énergie ou un réseau de bord.

4. Système de commutation (10) selon l'une des revendications 1 à 3, dans lequel le système de commutation (10) présente un circuit de protection (34) qui est réalisé pour limiter une intensité de courant entre la première source d'énergie (16) et la deuxième source d'énergie à une valeur maximale admissible ou essentiellement à zéro.

5. Système de commutation (10) selon l'une des revendications précédentes, dans lequel le moyen de commande (18) est réalisé pour être alimenté en énergie électrique depuis la première source d'énergie (16) ou une autre source d'énergie.

6. Système de commutation (10) selon l'une des revendications précédentes, dans lequel le moyen de commande (18) est réalisé comme partie du système de gestion de batterie (12).

7. Système de commutation (10) selon l'une des revendications précédentes, dans lequel l'électronique de cellule de batterie (36) est disposée à un endroit distant du système de gestion de batterie (12).

8. Système de commutation (10) selon l'une des revendications précédentes, dans lequel le système de gestion de batterie (12) est réalisé pour adopter différents états de fonctionnement, dans lequel le système de gestion de batterie (12)
- adopte un premier état de fonctionnement (28) lorsque la première unité de commutation (14) et la deuxième unité de commutation (22) se trouvent dans le premier état,
- adopte un deuxième état de fonctionnement (30) lorsque la première unité de commutation (14) se trouve dans le deuxième état et la deuxième unité de commutation (22) se trouve dans le premier état,
- adopte un troisième état de fonctionnement (32) lorsque la première unité de commutation (14) et la deuxième unité de commutation (22) se trouvent dans le deuxième état.

9. Système de commutation (10) selon l'une des revendications précédentes, dans lequel le système de gestion de batterie (12) est réalisé pour générer, sur base d'une information de batterie sortie par l'électronique de cellule de batterie (36) et d'une information de surveillance sortie par l'unité de surveillance (38), une information de commande et pour transmettre l'information de commande au moyen de commande (18).

10. Système de commutation (10) selon la revendication 9, dans lequel le système de gestion de batterie (12) est réalisé pour constater que
- aucune amenée d'énergie vers la première source d'énergie (16) n'a lieu; et
- aucune évacuation d'énergie de la première source d'énergie (16) n'a lieu
et par conséquent provoquer un changement d'un premier état de fonctionnement (28) du système de gestion de batterie (12) à un deuxième état de fonctionnement (30) du système de gestion de batterie (12).

11. Procédé de commutation d'une alimentation électrique d'un système de gestion de batterie (12), dans lequel le procédé présente les étapes suivantes consistant à:
activer une première unité de commutation (14) et une deuxième unité de commutation (22) par un moyen de commande (18), l'activation comprenant ce qui suit:
- connecter une première source d'énergie (16) à au moins une électronique de cellule de batterie (36) du système de gestion de batterie (12) par la première unité de commutation (14) dans un premier état;
- interrompre l'alimentation en énergie de l'électronique de cellule de batterie (36) du système de gestion de batterie (12) depuis la première source d'énergie (16) dans un deuxième état de la première unité de commutation (14) dans lequel la première unité de commutation (14) s'ouvre,
- connecter une deuxième source d'énergie (20) à une unité de surveillance (38) du système de gestion de batterie (12) par la deuxième unité de commutation (22) dans un premier état; et
- interrompre l'alimentation en énergie de l'unité de surveillance (38) du système de gestion de batterie (12) depuis la deuxième source d'énergie (20) dans un deuxième état de la deuxième unité de commutation (22) dans lequel la deuxième unité de commutation (22) s'ouvre,
**caractérisé par le fait que**
la première unité de commutation (14) et la deuxième unité de commutation (22) sont commandées de sorte que soit d'application: lorsque la deuxième unité de commutation (22) se trouve dans le deuxième état, la première unité de commutation (14) se trouve également dans le deuxième état.

12. Procédé selon la revendication 11, comprenant par ailleurs le fait de
sortir une information de batterie par une électronique de cellule de batterie (36);
vérifier, sur base de l'information de batterie, s'il existe des conditions pour changer d'un premier état de fonctionnement (28) à un deuxième état de fonctionnement (30), où
- dans le premier état de fonctionnement (28), la première unité de commutation (14) se présente dans le premier état et;
- dans le deuxième état de fonctionnement (30), la première unité de commutation (14) se présente dans le deuxième état;
donner instruction à l'unité de commande (18) de changer du premier état de fonctionnement (28) au deuxième état de fonctionnement (30).

13. Programme d'ordinateur avec un code de programme pour réaliser le procédé selon la revendication 11 ou 12 lorsque le programme d'ordinateur est exécuté sur un ordinateur ou un processeur.
